# FASCICULE DE BREVET EUROPEEN

(11) **EP 1 542 329 B1**
(45) Date de publication et mention de la délivrance du brevet: **05.07.2006**
(21) Numéro de dépôt: 04370035.0
(22) Date de dépôt: 08.12.2004
(51) Int. Cl.: H02G 3/32

(54) **Console de montage pour chemins de câbles**
Montagekonsole für Kabelkanäle
Mounting bracket for cable channels

(30) Priorité: 08.12.2003 FR 0314343
(43) Date de publication de la demande: 15.06.2005
(73) Titulaire: Tolmega, S.A., 62400 Bethune (FR)
(72) Inventeur: Colmart, André, 62290 Noeux les Mines (FR)
(74) Mandataire: Hennion, Jean-Claude

(56) Documents cités:
- FR-A- 2 697 690
- FR-A- 2 727 712
- FR-A- 2 812 773
- FR-A- 2 836 980

## Description

L'invention se rapporte au domaine technique des éléments supports de montage pour chemins de câbles.

La présente invention trouvera principalement son intérêt, en coq, dans la réalisation de consoles de montage pour chemins de câbles. C'est cette application qui sera principalement détaillée dans la suite. Toutefois l'invention pourra également concerner tout autre élément support connu de l'homme du métier, les enseignements relatifs aux exemples de console décrits étant transposables à tout type de support présentant une surface d'appui pour chemins de câbles.

Les chemins de câbles sont des structures en forme de gouttière permettant de supporter, de guider et de protéger des câbles tels que notamment des câbles électriques, des câbles téléphoniques, des câbles de fibres optiques, des câbles de réseau informatique, des canalisations.

Les chemins de câbles peuvent être à fil ou en feuille perforée ou non, les expressions « chemin de câbles », « chemin de câbles à fil », « chemin de câbles perforés », « chemin de câbles à base pleine » étant employées ici en référence notamment à la norme internationale publiée en septembre 2001 sous le numéro CEI 61537.

Par « chemins de câbles à fil » on désigne ici des chemins de câbles réalisés par assemblage de deux séries de fils, à savoir, une première série de fils, communément appelés fils de chaîne, courant longitudinalement, de manière typiquement rectiligne ou quasi rectiligne sur toute leur longueur ; et une deuxième série de fils, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage. Les fils de trame sont typiquement en U, de sorte que le chemin à câbles en treillis comprend un panneau de fond et deux panneaux latéraux, communément appelés ailes. Par « fils » on désigne ici aussi bien des profilés pleins de section transversale sensiblement ovale ou circulaire, que des profilés de section transversale carrée ou rectangulaire. Les fils de trame peuvent notamment se présenter sous forme de bandes étroites, de section transversale rectangulaire.

Les fils sont de sections identiques ou non, les fils longitudinaux du panneau de fond autres que ceux plus proches des ailes latérales étant par exemple de section plus faible.

Afin de résister à la corrosion, les treillis de fils peuvent être revêtus ou bien encore zingués ou galvanisés à chaud. La soudure des fils est conventionnellement réalisée à plat, le treillis étant déformé par pliage ou cambrage, après soudure, de façon à prendre la forme d'une gouttière.

Des exemples de chemins de câbles à fil du type présenté ci-dessus peuvent être trouvés dans les documents suivants :
- demandes de brevet français publiées sous les numéros 2017070, 2376539, 2576158, 2599906, 2613146, 2617341, 2628904, 2634600, 2645359, 2652206, 2652142, 2669708, 2686393, 2687207, 2691590, 2697313, 2697690, 2698416, 2706973, 2716242, 2716768, 2723270, 2725772, 2725846, 2727186, 2728649, 2734503, 2737355, 2750754, 2766897 ;
- demandes de brevet européen publiées sous les numéros 0191667, 0229544, 0275185, 0352191, 0355081, 0390668, 0418167, 0553039, 0556137, 0718944, 0818862, 0905843 ;
- demandes internationales de brevet publiées sous les numéros 96/08063, 99/06746 ;
- demandes de brevet allemands publiées sous les numéros 2036325, 4037412, 4336168.

Par « chemins de câbles en feuille » on désigne ici des chemins de câbles formés par l'assemblage de profils, le plus souvent métalliques, comprenant au moins une paroi formant fond et deux ailes, ces profils présentant notamment des sections transversales en U ou en C. Les parois des chemins de câbles en feuille peuvent être pleines ou perforées, et sont parfois configurées sur leur bord libre pour recevoir un couvercle, par exemple par encliquetage.

Afin de résister à la corrosion, les tôles subissent conventionnellement un traitement de paroi tel que peinture, zingage ou galvanisation à chaud.

Le cas échéant, en cas d'atmosphère très agressive, un acier inoxydable est employé pour les tôles. Ces chemins de câbles peuvent également être en matériau composite, tel que par exemple polyester armé, notamment obtenu par pultrusion.

Des exemples de chemins de câbles en feuille du type présenté ci-dessus peuvent être trouvés dans les documents suivants :
- demandes de brevet en France publiées sous les numéros 1471497, 2290063, 2306552, 2313786, 2365902, 2383539, 2395449, 2406327, 2435844, 2478389, 2481015, 2536219, 2610145, 2610769, 2615587, 2683403, 2686142, 2689605, 2691227, 2691228, 2712831, 2734956, 2749912, 2749913, 2749914, 2769761, 2481015 ;
- demandes de brevet européen publiées sous les numéros 0054456, 0113981, 0208924, 0278923, 0292389, 0315531, 0348285, 0403440, 0518404, 0570272, 0657672, 0695009, 0813012 ;
- demande internationale de brevet publiée sous le numéro 93/23694.

Une console pour chemins de câbles comprend conventionnellement :
- une partie avant dans laquelle s'étend une paroi supérieure de pose, paroi sur laquelle les tronçons de chemins de câbles sont en appui ;
- une partie arrière de montage de la console sur un support tel que par exemple un rail en U ;
- une paroi de liaison entre la paroi supérieure de pose et la partie arrière de la console, cette paroi de liaison reportant la charge.

Les consoles pour chemins de câbles connues dans l'art antérieur sont presque toutes conçues pour un seul type de chemins de câbles : à fil ou en feuille, voir par exemple FR 2017070 pour une console de chemins de câbles à fil.

Pour les consoles de chemins de câbles en feuille, on peut se référer, par exemple, aux documents suivants :
- demandes de brevet français publiées sous les numéros 1227189, 2234503, 2437719, 2509423, 2529641, 2532792, 2540946, 2677430 ;
- demandes de brevet européen publiées sous les numéros 0813278, 0813280, 1056175, 1056176 ;
- demande internationale de brevet publiée sous le numéro 93/04612.

La partie avant des consoles de chemins de câbles connues dans l'art antérieur n'est que très rarement conçue pour recevoir des tronçons de chemins de câbles à fil.

Le plus souvent, cette partie avant, lorsque vue sur le coté, présente un profil en L, en T, en C ou en U. Pour les profils en L ou en T on peut se reporter, par exemple, aux documents FR 1227189, FR 2017070, FR 2532792. Pour les profils en U ou en C, on peut se reporter, par exemple, aux documents FR 2234503, FR 2437719, FR 2529641, FR 2540946, FR 2677430, FR 2692643, EP 0294273, EP 0332746, EP 0547128, EP 0575269, EP 0813278, EP 0813280, EP 1155638, WO 93/04612, US 3137468, US 3923277, US 3936024, US 4232845, US 4299362.

Dans certains montages antérieurs, c'est un accessoire qui permet la fixation du chemin de câbles à fil sur son support : voir par exemple FR 2716242, FR 2785340, FR 2791115, FR 2817675, EP 0399790, WO 00/27005 pour de telles attaches élastiques ou étriers.

Des attaches élastiques spécifiques, de structures différentes des précédentes, ont été proposées pour des chemins de câbles en feuille : voir par exemple FR 2730028, FR 2801439, EP 0725467, EP 1107412, EP 1107413.

L'emploi de tels accessoires alourdit le coût d'une installation de chemins de câbles et la rend fastidieuse.

Quelques rares consoles pour chemins de câbles connues dans l'art antérieur sont présentées comme conçues pour permettre, sans accessoire, le montage tant de chemins de câbles à fil que de chemins de câbles en feuille. On peut se reporter, par exemple, aux documents FR 2697690, FR 2726697, FR 2727712, FR 2757695, FR 2757696, FR 2812773, FR 2812775, FR 2812927, EP 0849853, WO 96/17143, WO 98/27630, US 5899041, US 6082690.

On peut se reporter également aux documents FR 2836979 et FR 2836980 de la demanderesse, le deuxième étant considéré comme représentant l'état de la technique le plus proche.

L'avantage d'adaptabilité n'est toutefois obtenu, dans l'art antérieur, comme signalé dans le document FR 2836980 de la demanderesse, qu'au prix de deux inconvénients dommageables à l'usage :
- la mise en place d'arrêtes vives, issues du découpage de la tôle formant la console, ces longues arrêtes vives avec des dents pouvant blesser l'opérateur et/ou les câbles placés dans le réseau formé par les chemins de câbles, notamment lors du tirage des câbles sur le réseau ;
- la difficulté de réaliser des consoles présentant une paroi de support de grande largeur.

Les consoles antérieures conçues pour le montage, sans accessoires tels qu'attaches élastiques, de chemins de câbles à fil et en feuille présentent les inconvénients supplémentaires suivants, que la présente invention vise à remédier.

La console décrite par le document FR 2697690 ne peut être utilisée pour des chemins de câbles à fil dont le pas entre fils longitudinaux varie, ou dont le diamètre des fils longitudinaux varie. En effet, le chemin de câbles est solidarisé à la console par glissement latéral des fils longitudinaux dans des ergots, écartés les uns des autres d'une distance correspondant à un pas donné pour les fils longitudinaux.

Dans ce montage antérieur, pour obtenir un maintien des fils longitudinaux, lorsque ceux-ci ont un diamètre inférieur à la hauteur des ergots, il est nécessaire d'utiliser un accessoire tel qu'un étrier. De plus, pour pouvoir utiliser la console de ce document FR 2697690 pour des chemins de câbles en feuille, il faut au préalable écraser les ergots avec un marteau (voir page 10 lignes 9 à 13 de ce document).

La mise en place d'une butée d'encliquetage, telle que décrite dans le document FR 2726697 ne résout pas mais aggrave les problèmes mentionnés ci-dessus. Le chemin de câbles en feuille doit être pourvu de perforations spécifiquement placées en correspondance avec les ergots et la butée d'encliquetage portés par la console. Un chemin de câbles à fil devra de même être pourvu de fils longitudinaux écartés d'un pas correspondant à la distance entre les ergots et à la distance entre un ergot et la butée d'encliquetage. A défaut, l'accrochage ne pourra être obtenu ou le tronçon de chemins de câbles ne sera pas maintenu en position fixe. Il en ira de même si les diamètres de fils longitudinaux sont supérieurs ou inférieurs à la hauteur des ergots.

L'adaptation à un pas variable et/ou à un diamètre de fils longitudinaux variables n'est pas davantage possible avec les consoles décrites dans les documents FR 2727712 (ou équivalents US 5899041, WO 96/17143), FR 2757696 (ou équivalents EP 0849853, WO 98/27630, US 6082690), FR 2812927.

Les documents FR 2812773 et FR 2812775 décrivent des consoles comprenant une pièce à ergot, du type décrit dans FR 2697690, cette pièce étant montée coulissante, avec rappel élastique, dans un profilé en U de console. Ici encore, l'écartement entre deux ergots ou crochets correspond à la distance séparant deux fils longitudinaux adjacents, de sorte que si le pas des fils longitudinaux varie, le tronçon ne sera maintenu que par un seul crochet (voir page 6 lignes 24 à 28 de FR 2812773).

Les consoles décrites dans les documents FR 2812773 et FR 2812775 sont particulièrement onéreuses et ne peuvent en outre être employées pour tout type de chemins de câbles : la fixation d'un chemin de câbles en feuille s'effectue en réalité sur une console très différente de celle pour chemin de câbles à fil (comparer figures 2 et 4 de FR 2812775 par exemple).

L'invention vise donc à fournir une console pour chemins de câbles, console permettant le montage, sans accessoire tel qu'attache élastique, de chemins de câbles à fil tout autant que de chemins de câbles en feuille, sans que des arêtes vives de la console ne puisse venir blesser l'opérateur ou les câbles, notamment lors du tirage des câbles, cette console étant peu onéreuse et pouvant être de grande largeur, cette console s'adaptant à différents écartements ou pas entre fils de chaîne et s'adaptant à différents diamètres de fils.

L'invention vise également à fournir une console évitant l'accrochage ou le coincement des fils de trame lors d'un glissement longitudinal du chemin de câbles en fil sur la console, une telle possibilité de glissement étant très utile pour l'opérateur, lors de l'installation des chemins de câbles. En effet, depuis de nombreuses années, et sans qu'il existe des règles internationales ou européennes en la matière, la dimension longitudinale des tronçons de chemins de câbles à fil ou en feuille est de trois mètres, en général, ainsi qu'il est rappelé en page 2 lignes 12 et 13 du document FR 2737355.

C'est à partir de ces longs tronçons aboutis que l'opérateur constitue un réseau de chemins de câbles. La possibilité de faire glisser un tronçon posé sur consoles, pour mise en place de ce tronçon facilite grandement le montage du réseau de chemins de câbles. De même, il est souhaitable qu'un mouvement de télescopage de tronçons, tel que décrit dans le document EP 1257030 de la demanderesse ne soit pas gêné par la structure des consoles.

A ces fins, l'invention se rapporte, selon un premier aspect, à un élément support pour chemins de câbles à fil ou en feuille, comprenant des gorges permettant l'engagement de fils d'un chemin de câbles, caractérisé en ce qu'il comprend au moins une fente délimitant avec une gorge, une mince bande de matière déformable plastiquement contre un fil engagé dans ladite gorge pour le blocage de ce fil dans sa gorge, les gorges étant formées par encoches en creux et/ou par emboutis dans une paroi dite supérieure de l'élément support, le fond des gorges définissant un plan d'appui pour fils d'un chemin de câbles.

Selon diverses réalisations, la console présente les caractères suivants, le cas échéant combinés :
- les gorges sont réparties selon la longueur de la partie porteuse de la console, suivant un pas correspondant à un intervalle de répétition des fils d'un chemin de câbles ;
- les gorges s'étendent sur toute la largeur de la paroi d'appui supérieure ;
- chaque gorge est disposée à proximité d'une fente de sorte à border une bande de matière plastiquement déformable contre un fil d'un chemin de câbles ;
- la profondeur des gorges est au moins égale ou sensiblement supérieure à la mi-section des éléments longilignes qu'elles sont destinées à recevoir ;
- la profondeur des gorges est supérieure à la section des éléments longilignes qu'elles sont destinées à recevoir ;
- sa paroi d'appui supérieure est la paroi dorsale d'un profilé de section en L, en C ou en U, en W, X, carré, rond ou en oméga, les ailes de ce profilé rigidifiant la console ;
- les consoles comprennent une branche dans laquelle sont placées les gorges et fentes, et une autre branche sensiblement perpendiculaire, ou deux autres branches, les branches étant raccordées entre elles par des zones de coude ;
- au moins une gorge s'étend sensiblement perpendiculairement aux autres gorges, la console permettant ainsi le blocage de fil de chaîne ou de fil de trame d'un chemin de câbles à fil ;
- la fente délimitant pour chaque gorge une bande déformable s'étend sensiblement parallèlement à cette gorge, mais sur une partie seulement de la longueur de cette gorge ;
- la fente délimitant pour chaque gorge une bande déformable s'étend sensiblement parallèlement à cette gorge et sur toute la longueur de ladite gorge ;
- les gorges s'étendent sur toute la largeur de la paroi supérieure, les fentes s'étendant, à proximité d'un bord latéral de la paroi supérieure de la console ou constituant des lumières sensiblement à mi-largeur de cette paroi supérieure ;
- les fentes s'étendent chacune, pour chaque gorge à partir d'un bord latéral de cette paroi d'appui ;
- les fentes sont formées par des trous oblongs dont un bord est à faible distance des gorges ;
- au moins une saillie vient partiellement restreindre l'ouverture d'une gorge de sorte à former appui pour un composant longiligne engagé dans ladite gorge et/ou de sorte à former une patte élastique d'encliquetage lors de l'engagement dudit composant longiligne dans ladite gorge ;
- au moins une saillie est prévue en fond de gorge de sorte à former une patte élastique d'encliquetage lors de l'engagement dudit composant longiligne dans ladite gorge ;
- elle comprend au moins une gorge de réception de fil de chemins de câbles, gorge délimitée par deux emboutis contigus ménagés dans la paroi supérieure de la console ;
- au moins un des emboutis porte ladite fente définissant, sur une partie du pourtour de l'embouti, ladite bande déformable plastiquement contre un fil engagé dans la gorge délimitée par les emboutis contigus ;
- elle comprend au moins un embouti pourvu d'un trou oblong de passage d'un moyen de fixation pour chemins de câbles en feuille.

D'autres objets et avantages de l'invention apparaîtront au cours de la description suivante de modes de réalisation, description qui va être effectuée en se référant aux dessins annexés dans lesquels :
- la figure 1 est une vue de coupe d'un tronçon de chemin de câbles à fil, placé sur une console selon un mode de réalisation ;
- la figure 2 est une vue en coupe d'un tronçon de chemin de câbles en feuille, posée sur une console selon un autre mode de réalisation ;
- la figure 3 est une vue de la console représentée en figure 2, cette console étant représentée seule en figure 3 ;
- la figure 4 est une vue selon la flèche IV de la console de la figure 3 ;
- les figures 5 à 8 sont des vues en coupe suivant le plan A-A de la figure 3, suivant quatre modes de réalisation ;
- les figures 9 et 10 sont des vues en coupe de la paroi de pose d'une console, un fil de chemin de câbles étant placé dans une gorge ou encoche de cette paroi de pose, la figure 9 représentant l'état de la paroi de pose avant coincement du fil, la figure 10 représentant l'état de la paroi de pose après coincement du fil, par déformation plastique d'une bande de matière définie dans la paroi de pose ;
- les figures 11 et 12 sont des figures analogues aux figures 9 et 10 respectivement, le diamètre du fil étant plus grand que dans la réalisation des figures 9 et 10 ;
- les figures 13 et 14 sont des figures analogues aux figures 9 et 10 respectivement, pour un autre mode de réalisation ;
- les figures 15 et 16 sont des vues analogues à celles des figures 9 et 10 respectivement, pour une autre variante de réalisation ;
- les figures 17 et 18 sont des vues analogues à celles des figures 9 et 10 respectivement, pour une autre variante de réalisation ;
- la figure 19 est une vue analogue à celle de la figure 9 d'une autre variante de réalisation ;
- la figure 20 est une vue en coupe d'un embouti réalisé dans une paroi de pose d'une console, un tronçon de chemin de câbles en feuille étant monté sur cet embouti ;
- la figure 21 est une vue en coupe d'un embouti réalisé dans une paroi de pose de console, un fil de chemins de câble à fil étant logé dans cet embouti ;
- la figure 22 est une vue analogue à celle de la figure 21, pour une variante de réalisation ;
- les figures 23 et 24 sont des vues analogues à celle de la figure 21 pour une autre variante de réalisation avant et après coincement du fil respectivement ;
- les figures 25 à 27 sont des vues de profil de trois variantes de réalisation d'embouti pour paroi de pose de chemin de câbles ;
- les figures 28 à 41 sont des vues de dessus de paroi de pose de chemins de câbles selon diverses réalisations ;
- les figures 42 et 43 sont des vues de profil, suivant deux directions perpendiculaires, correspondant à la réalisation de la figure 41 ;
- la figure 44 est une vue de dessus d'une console, selon une autre réalisation ;
- la figure 45 est une vue latérale de la console représentée en figure 44 ;
- les figures 46 à 53 sont des vues en perspective de variantes de réalisation de consoles ;
- les figures 54 et 55 sont des vues respectivement en perspective et de profil d'une variante de réalisation de console ;
- les figures 56 et 57 sont des vues respectivement en perspective et de profil d'une variante de réalisation de console ;
- la figure 58 est une vue de dessous d'une variante de réalisation de console.

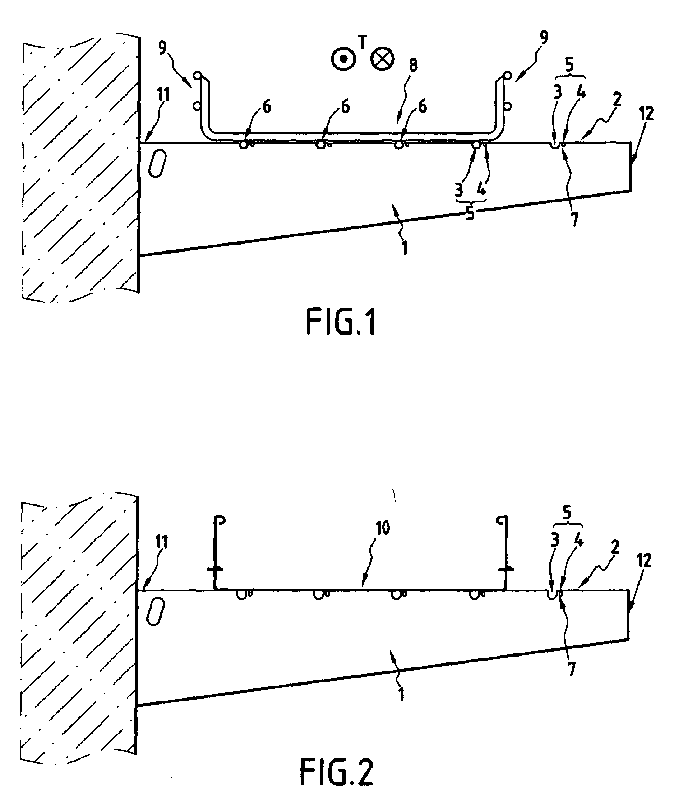

On se rapporte tout d'abord à la figure 1.

La console 1 représentée sur cette figure 1 est fixée à un support, par exemple un mur, par des moyens conventionnels.

Cette console 1 définit une paroi dite supérieure de pose 2 pour tronçons de chemins de câbles. Cette paroi de pose est sensiblement plane à l'exception de rainures ou gorges 3 et de fentes 4.

Dans la réalisation représentée en figure 1, ces rainures et fentes 3,4 sont disposées par paires 5, ces paires 5 étant sensiblement équidistantes.

Dans d'autres modes de réalisation, non représentés, les paires 5 ne sont pas équidistantes mais disposées elles mêmes par paires, ou groupes équidistants. Les rainures 3 servant à recevoir les fils de chaîne 6 d'un chemin de câbles à fil, une telle disposition en paires ou groupes équidistants de paires de rainures et fentes 3,4 permet à la console de recevoir des tronçons de chemins de câbles à fil dont les fils de chaîne sont écartés entre eux de différents pas, seules certaines rainures 3 étant occupées par des fils de chaîne.

Dans les réalisations représentées, les rainures 3 ont un profil en U symétrique ou non et les fils des chemins de câbles sont des profilés pleins de section transversale circulaire.

Il est entendu toutefois que les fils peuvent être de section autre, notamment ovale, carrée ou rectangulaire, ou se présenter sous forme de bandes étroites.

Les rainures ont une profondeur telle qu'elles peuvent loger au moins sensiblement la moitié du diamètre des fils d'un chemin de câbles à fil.

Dans la réalisation représentée en figure 1, la console 1 est fixée à un support sensiblement vertical et le chemin de câbles est sensiblement horizontal.

Ainsi qu'il apparaîtra par la suite, la console peut également être fixée à une paroi inclinée, les fils de chaîne du chemin de câbles étant non seulement logés dans les rainures 3 mais bloqués à la demande dans ces rainures 3 par déformation plastique de la bande de matière 7 délimitée latéralement par les rainure 3 et fente 4.

Dans la réalisation de la figure 1, ce sont les fils de chaîne de la paroi de fond 8 du chemin de câbles qui sont logés dans les rainures 3.

Il est entendu toutefois que la console peut indifféremment recevoir les fils de chaîne de la paroi de fond ou des ailes 9 du chemin de câbles.

Ainsi qu'il apparaît en figure 2, la même console 1 peut recevoir et bloquer en position, par des moyens qui seront décrits en détail par la suite, un tronçon de chemin de câbles en feuille 10.

Il est à noter que l'opérateur peut, avant blocage des fils de chaîne 6, faire glisser un tronçon de chemins de câbles à fil sur les consoles 1, les gorges 3 pouvant loger les fils de chaîne 6 et guider ce glissement, la structure de la console représentée en figure 1 ne bloquant pas ce glissement, par contraste avec les réalisations antérieures décrites par exemple dans les documents FR 2727712 ou FR 2812773, FR 2697690.

En dehors des gorges 3 et fentes 4 longitudinales, la console 1 représentée en figure 1 est pourvue d'une paroi supérieure de pose 2 sensiblement plane, dépourvue d'aspérités tels qu'ergots, de sorte que les fils de trame transversaux peuvent aisément glisser sur la console lorsque l'opérateur tire manuellement sur un tronçon, suivant la flèche T de la figure 1. Pour éviter un effet de marche d'escalier trop important, les bords transversaux latéraux 2a, 2b de la console 1 peuvent être arrondis, facilitant le passage des fils de trame, lors du glissement selon la direction T.

La figure 4 montre une vue de dessus de la console 1 représentée en figures 1 à 3.

Dans la réalisation représentée sur cette figure 4, la paroi supérieure de pose 2 des chemins de câbles est d'une largeur I décroissante depuis la partie arrière 11 d'accrochage à un support jusqu'à la partie libre avant 12 de cette console.

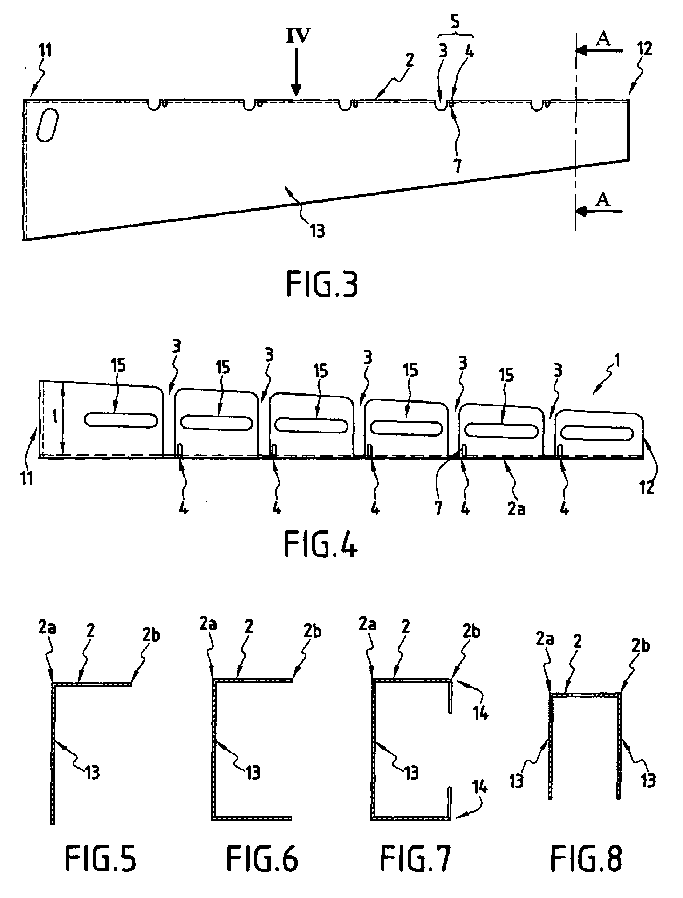

La console représentée en figure 4 a un profil en L du type représenté en figure 5, la paroi supérieure de pose 2 étant sensiblement perpendiculaire à une paroi de liaison 13. Cette paroi de liaison 13, par exemple trapézoïdale comme représentée en figure 3, reporte la charge et relie la paroi de pose 2 à la partie arrière 11 d'accrochage de la console 1 sur son support de pose tel que par exemple un rail.

Les rainures 3 sont sensiblement parallèles entre elles et s'étendent sur toute la largeur I de la console 1.

Les fentes 4, quant à elles, ne s'étendent pas sur toute la largeur I de la paroi de pose 2 mais seulement sur une petite partie de cette largeur, et sont sensiblement parallèles entre elles et parallèles aux rainures 3.

Les fentes 4 sont chacune placées à faible distance d'une rainure 3, de sorte qu'une bande de matière étroite 7 est délimitée latéralement par une rainure 3 et une fente 4 d'une paire 5 correspondante.

La déformation plastique de cette bande de matière 7, à l'aide d'un outil tel que par exemple un tournevis introduit dans la fente 4, permet le blocage d'un fil de chaîne logé dans la rainure 3 correspondante.

La console 1 pourra présenter un profil en L comme vu en figure 5 ou bien encore un profil en C ainsi qu'il est représenté en figure 6, ou en U comme représenté en figure 8 avec éventuellement équerre de renfort 14 comme représenté en figure 7.

La paroi de pose 2 de la console 1 représentée en figure 4 comprend des trous oblongs 15 permettant le blocage en position, par rivetage ou boulonnage, de la paroi de fond d'un tronçon de chemins de câbles en feuille.

La disposition de ces trous oblongs permet le réglage transversal de la position d'un tronçon de chemins de câbles sur la console. Si, de plus, comme connu en soi, le chemin de câbles en feuille est pourvu, sur sa paroi de fond ou sur une aile, de trous traversant oblongs longitudinaux, le tronçon de chemins de câbles en feuille pourra être positionné de manière précise et adéquate, tant longitudinalement que transversalement sur la console 1.

Dans une variante de réalisation, non représentée, la console 1 est pourvue de trous traversant en forme de X ou de croix permettant le réglage en position d'un tronçon de chemins de câbles en feuille, tant longitudinalement que transversalement, même lorsque ce tronçon n'est pourvu que de trous sensiblement circulaires placés en regard des trous traversant en X ou en croix de la console.

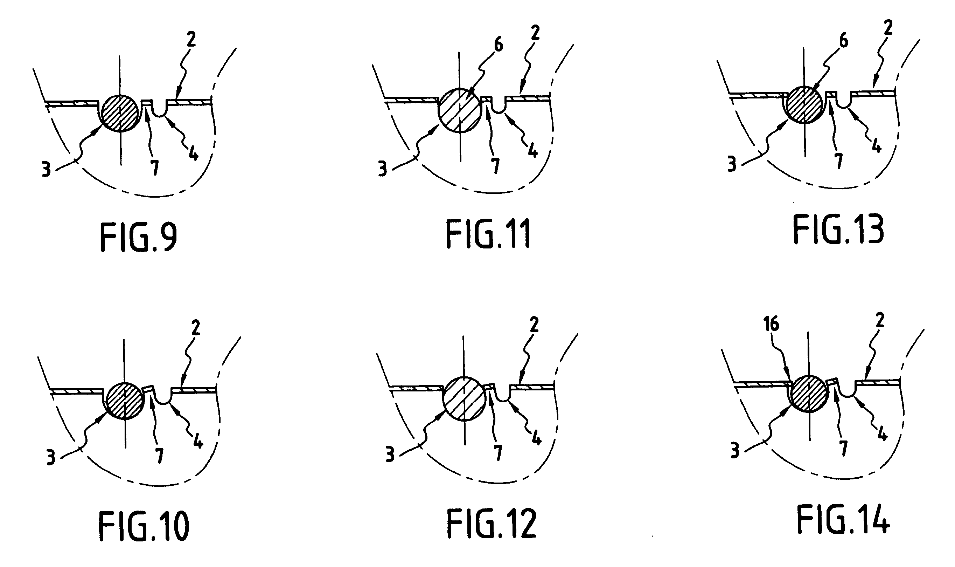

Ainsi qu'il apparaît en figures 9 à 12, la déformation plastique de la bande de matière 7 associée à des rainures 3 de grande ouverture, par rapport au diamètre de fil conventionnellement rencontré dans les chemins de câbles, autorise l'emploi de la console 1 pour une large gamme de diamètres de fils.

Lorsque le diamètre de fil est relativement faible par rapport aux dimensions de la rainure 3, la déformation de la bande de matière 7 sera importante comme représenté en figure 10. Lorsque, par contraste, le fil présente un diamètre plus important, comme représenté en figure 12, la déformation de la bande de matière 7 pour le blocage du fil 6 dans l'encoche 3 pourra être plus modeste. A l'extrême, le fil sera enfoncé à force dans la rainure 3, la bande de matière 7 assurant à ce moment une relative élasticité facilitant cette insertion à force.

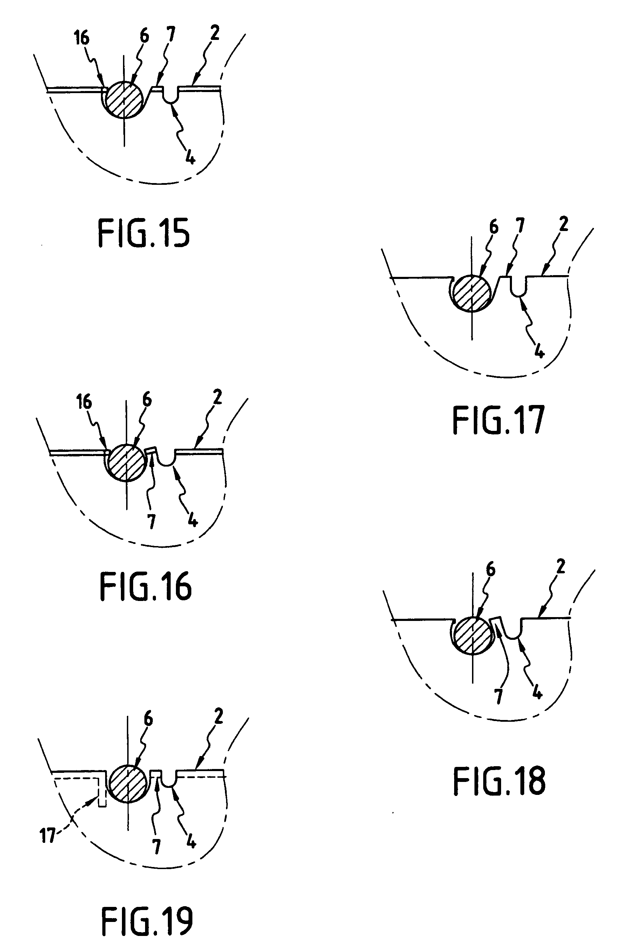

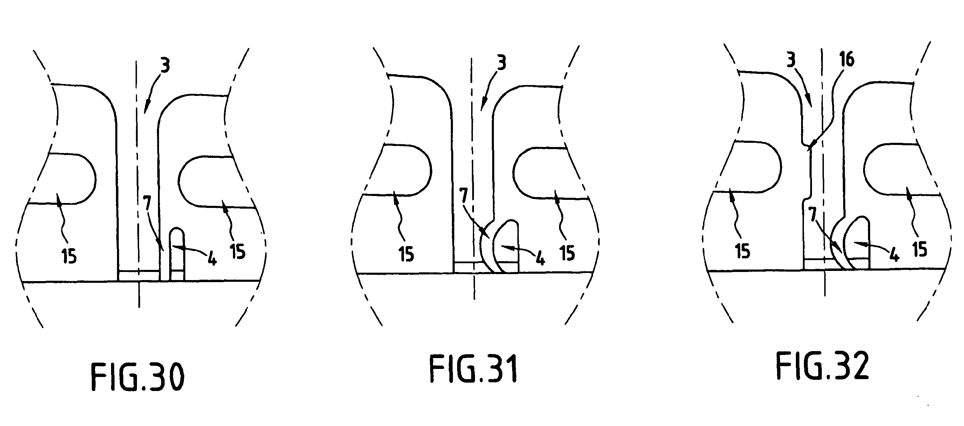

Le cas échéant, comme représenté en figures 15 et 16, et illustré en vue de dessus aux figures 32, 34, 36 et 37, la rainure 3 logeant le fil 6 sera pourvue d'une bande en saillie 16 venant renforcer le blocage du fil 6 dans la rainure 3.

Ainsi qu'il apparaît en figures 15 à 18, les rainures 3 ne sont pas nécessairement en forme de U symétrique lorsque vues en coupe, le rayon de courbure étant, dans certaines réalisations, plus grand pour ces rainures 3 lorsque vues en coupe, à proximité de la bande de matière 7.

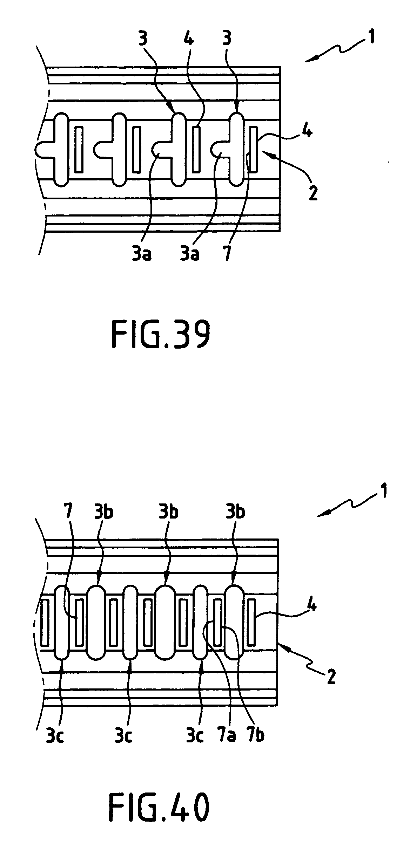

Le cas échéant, comme représenté en figure 19, une bande de matière 17 repliée sensiblement perpendiculairement à la paroi de pose 2 peut renforcer l'appui du fil 6 dans la rainure 3 lors de la déformation plastique de la bande de matière 7. Une telle réalisation est également mise en oeuvre dans l'exemple de la figure 38.

Les réalisations présentées en figures 9 à 16 et en figure 19 permettent le blocage de fils de chaîne ou de fils de trame d'un chemin de câbles à fil, en fonction de l'orientation donnée aux rainures 3 et fentes 4.

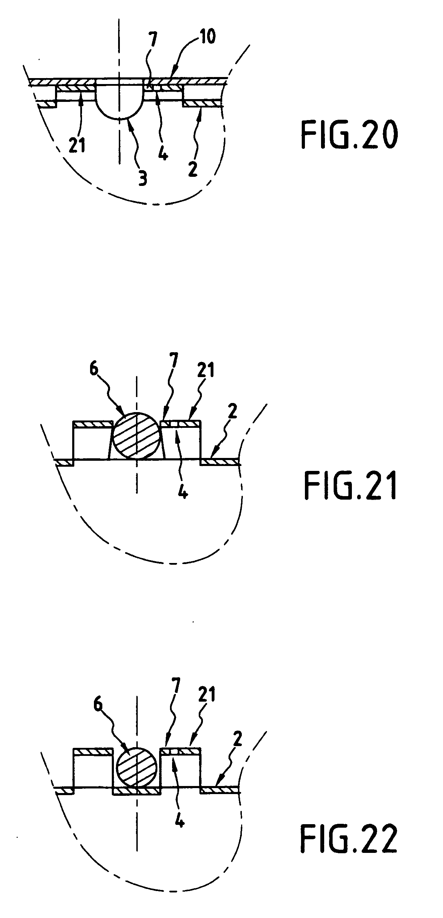

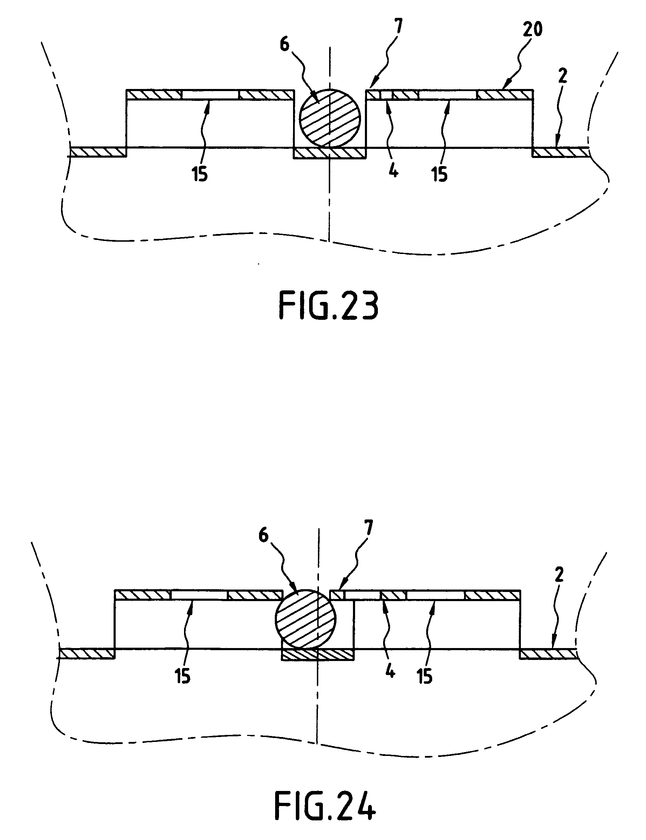

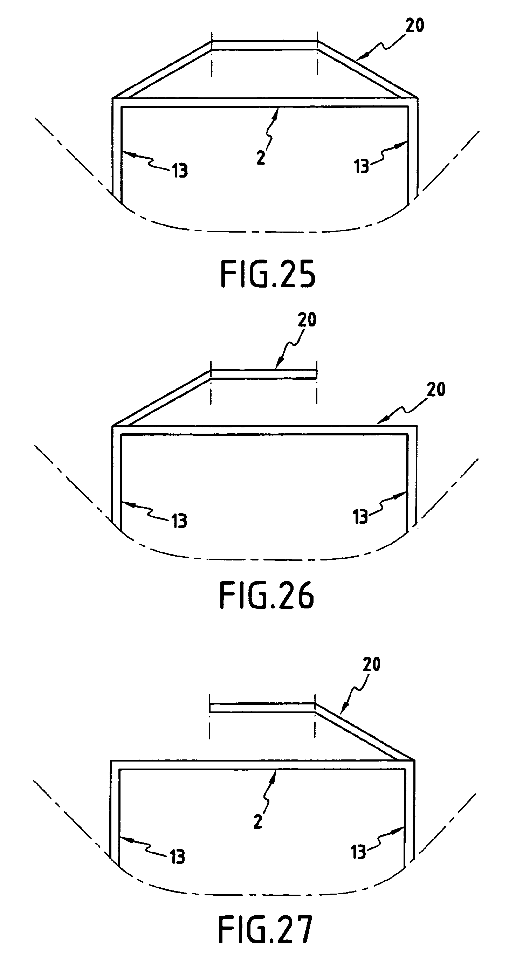

Il est entendu que ces réalisations des figures 9 à 16 et 19 peuvent correspondre à des rainures 3 et fentes 4 disposées dans une console du type représenté en figures 1 à 8. Mais il est entendu également que ce qui vient d'être dit en référence à ces figures 9 à 16 et 19 s'applique également lorsque les rainures 3 et fentes 4 sont ménagées dans des emboutis, par exemple du type représenté en figures 20 à 27.

Dans la variante représentée en figures 17 et 18, la rainure 3 est coupée de biais sur les bords latéraux de la paroi de pose 2 de la console 1.

Dans les réalisations des figures 20 à 27, des emboutis 20 définissent des parois d'appui 21 pour des chemins de câbles en feuille 10 (voir figure 20), ces parois d'appui 21 étant pourvues chacune d'une rainure 3 et d'une fente 4 définissant la bande de matière 7 dont la déformation plastique assure le blocage du fil 6 dans la rainure 3.

Les tronçons de chemins de câbles en feuille reposent sur ces emboutis qui sont formés en refoulant la matière, ces emboutis étant de paroi adaptée à un support stable du chemin de câbles.

Les emboutis peuvent être effectués de sorte à venir bloquer les fils de chaîne ou les fils de trame d'un chemin de câbles à fil.

En fonction de l'amplitude de l'emboutissage et du diamètre du fil logé dans la rainure 3, ce fil sera ou non en saillie par rapport à la paroi d'appui 21, ainsi qu'il est représenté en figures 21 et 22.

En plus de la rainure 3 et de la fente 4, les emboutis peuvent comprendre des trous oblongs tels que ceux décrits auparavant en référence 15, figure 4. Ces trous oblongs 15 permettent le blocage par rivetage ou boulonnage de chemins de câbles en feuille.

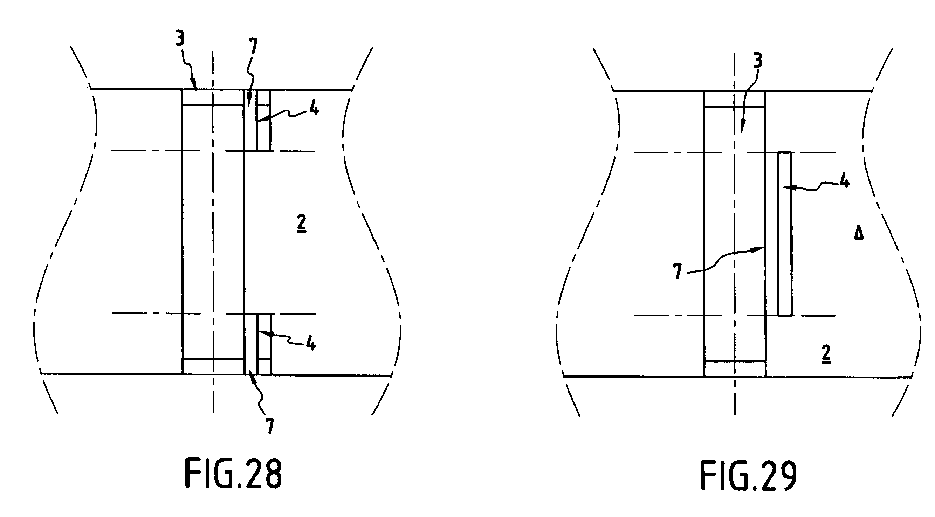

Les figures 28 à 41 illustrent différentes vues de dessus de consoles.

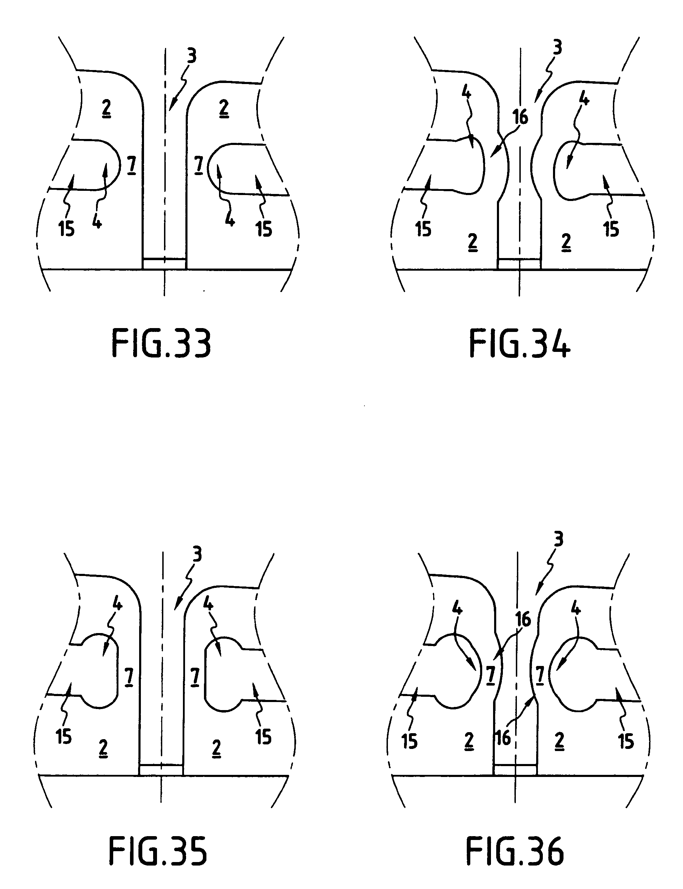

Lorsque la console est de section en L comme décrit auparavant en référence aux figures 4 et 5, la bande de matière déformable 7 peut être délimitée par la rainure 3 et les trous oblongs 15 décrits précédemment. De telles réalisations sont notamment représentées en figures 33 à 36. Le cas échéant, les trous oblongs 15 peuvent être pourvus, au voisinage de la rainure 3, d'une courbure particulière en trou de serrure affaiblissant localement la rigidité de la paroi de pose 2, ainsi qu'il est représenté en figures 34 à 36.

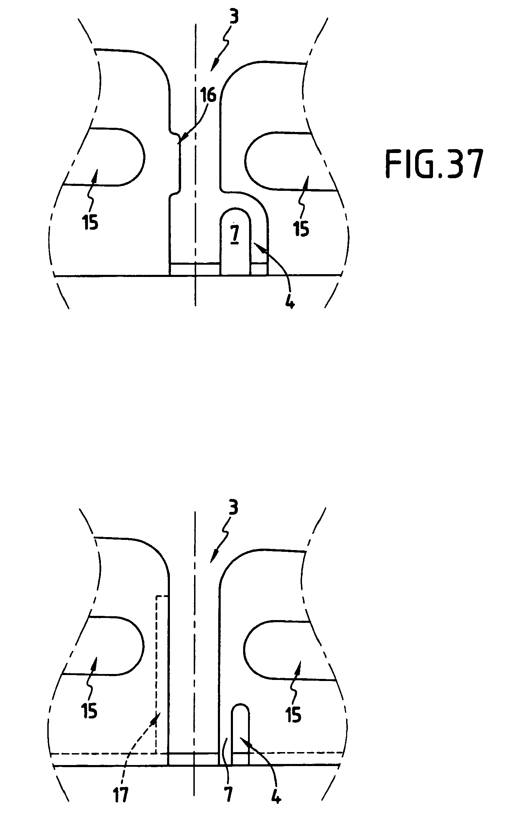

Dans la variante représentée en figure 37, la fente 4 et la rainure 3 sont communicantes, la bande de matière déformable 7 se présentant alors sous forme d'une patte.

Lorsque la console a un profil en U ou en C notamment schématisé en figures 7 et 8, deux bandes de matière déformable 7 peuvent être définies pour chaque rainure 3, au voisinage des deux bords latéraux de la paroi de pose 2, comme il est représenté en figure 28.

Dans la réalisation de la figure 29, par contraste, la fente 4 se présente comme une lumière placée à égale distance entre les bords latéraux de la paroi de pose 2.

Une disposition du type de celle de la figure 29 peut également être employée lorsque la console a un profil en oméga, ainsi qu'il apparaît en figures 39 et 40.

Dans la réalisation de la figure 39, la console est pourvue d'une paroi supérieure de pose 1 bordée latéralement par des plis de renfort, la console ayant ainsi un profil transversal en oméga. Les découpes ou gorges 3 s'étendent sur toute la largeur de la paroi supérieure de pose et comportent une lumière transversale 3a permettant le montage, par boulonnage ou rivetage, ou chemins de câbles en feuille.

Les gorges 3 peuvent de plus loger des fils de chaîne de chemins de câbles à fil, comme décrit auparavant, des fentes 4 longitudinales étant placées chacune à proximité d'une gorge 3, ces fentes 4 ne s'étendant pas sur toute la largeur de la paroi de pose, dans la réalisation de la figure 39.

Dans la variante de la figure 40, les gorges 3 sont de deux largeurs transversales différentes, des grandes gorges 3b étant placées en alternance avec des petites gorges 3c. cette disposition, avec une densité élevée de gorges sur la paroi supérieure de pose 2, améliore encore l'adaptabilité de la console 1 à une large gamme de diamètres ou fils. Il est à noter que les fentes 4 du mode de réalisation de la figure 40 sont placées à proximité et entre une petite et une grande gorge 3b, 3c, de sorte que chaque fente 4 peut être employée pour la déformation d'une des deux bandes de matière 7a, 7b délimitées par une gorge 3b, 3c et une fente 4.

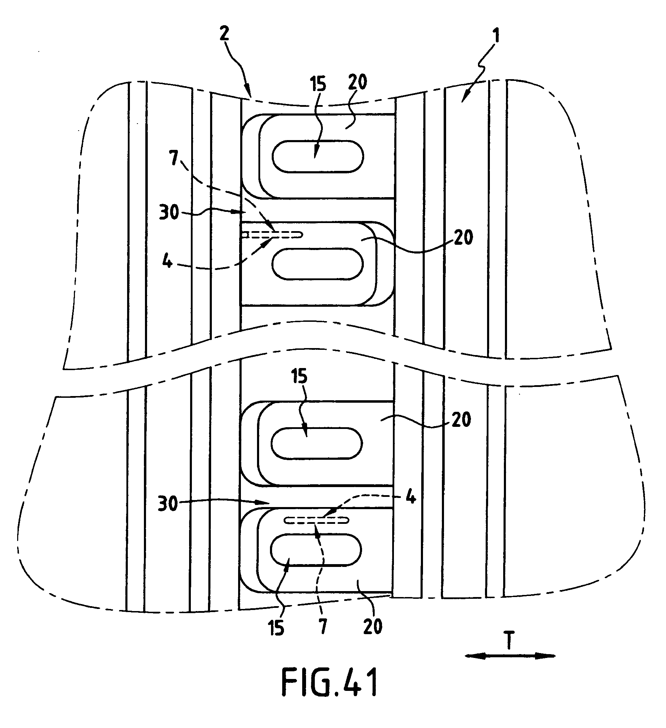

Dans la réalisation représentée en figures 41 à 43, la paroi supérieure de pose de la console 1 comprend des emboutis 20 qui s'étendent sensiblement perpendiculairement à l'élancement de la console 1. Ces emboutis 20 définissent des ouvertures pour l'insertion de fils de trame, ouvertures tournées du même coté de la console (figure 41 en bas) ou des deux cotés opposés de la console (figure 41 en haut).

En plus de cette première fonction, ces emboutis sont placés à une distance transversale telle que des fils de chaîne d'un chemin de câbles à fil peuvent être logés entre eux dans l'espace référencé 30 en figures 41 à 43.

En plus de cette deuxième fonction, les emboutis 20 sont pourvus de fentes transversales 4 permettant l'insertion d'un outil tel qu'un tournevis pour venir déformer une bande transversale 7 de matière et bloquer ainsi un fil de chaîne -non représenté- logé dans l'espace 30 correspondant.

En plus de cette troisième fonction, les emboutis 20 sont pourvus de trous oblongs tels que ceux décrits antérieurement en référence à la figure 4, référence 15, de sorte à permettre le blocage de chemins de câbles en feuille, posés sur les emboutis 20.

La console 1 représentée en figure 41 présente un profil transversal en oméga, tout comme celle des figures 39 et 40. il est entendu toutefois que la paroi de pose 2 à emboutis 20 qui vient d'être décrite en référence à cette figure 41 peut appartenir à une console de profils transversaux autres, par exemple décrits en référence aux figures 5 à 8.

Si la console décrite en référence à la figure 41 est utilisée pour le blocage de fils de trame d'un chemin de câbles à fil, les emboutis 20 peuvent être repliés, ou pourvus de saillie d'encliquetage de manière connue en soi et décrit dans les documents FR 2697690 ou FR 2726697.

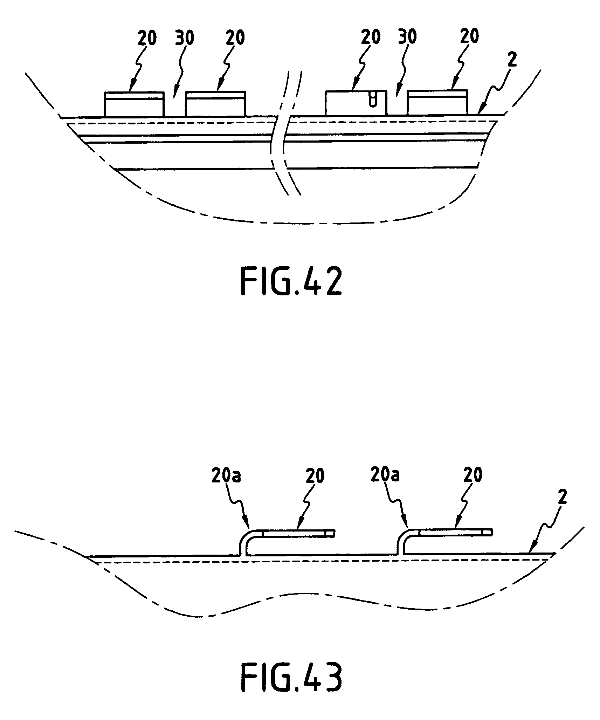

Il est à noter que la réalisation du bas de la figure 41 autorise le glissement des chemins de câbles à fil, lors de la pose, par traction manuelle du tronçon suivant une direction T, les fils de chaîne étant logés et guidés dans les espaces 30 de la console 1. Les arrondis 20a des emboutis (voir figure 43) limitent l'effort à fournir pour faire passer les fils de trame sur ces emboutis, lors du glissement suivant la direction T.

Ce glissement est avantageux lors de la pose, les tronçons étant conventionnellement d'une longueur de trois mètres et assez lourds : l'opérateur peut poser les tronçons sur les consoles puis les amener par glissement dans la position souhaitée du montage.

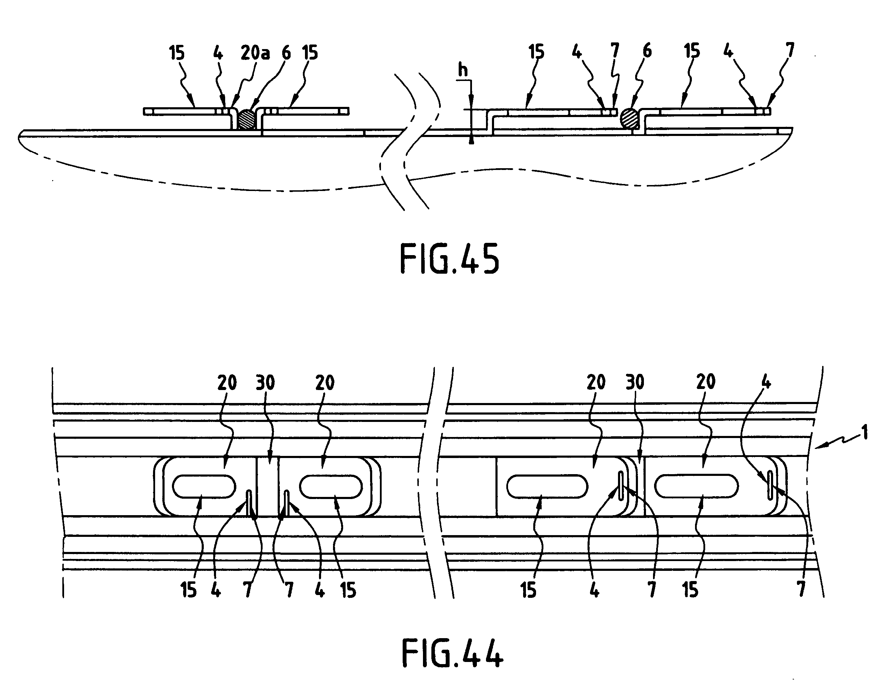

Dans la variante des figures 44 et 45, les emboutis 20 sont disposés transversalement, avec ouverture dans la même direction (partie droite des figures 44 et 45) ou dans deux directions opposées (partie gauche des figures 44 et 45).

La hauteur h et l'écartement des emboutis sont sensiblement égaux aux diamètres de fils de chaîne les plus couramment employés de sorte que ces fils de chaîne 6 peuvent être logés entre les emboutis 20 dans un espace référencé 30. Le blocage de ces fils de chaîne 6 dans ces espaces 30 est assuré par déformation plastique d'une bande de matière 7 définie dans les emboutis 20 par des fentes 4 longitudinales. Ces fentes 4 sont placées au voisinage du bord libre 40 des emboutis 20 (figure 44 partie droite) ou au voisinage du bord courbe 20a des emboutis (figure 44 partie gauche) et en tout état de cause au voisinage de l'ouverture de l'espace 30 logeant un fil de chaîne 6.

Les emboutis 20 sont de plus pourvus de trous oblongs analogues à ceux décrits en référence 15 de la figure 41.

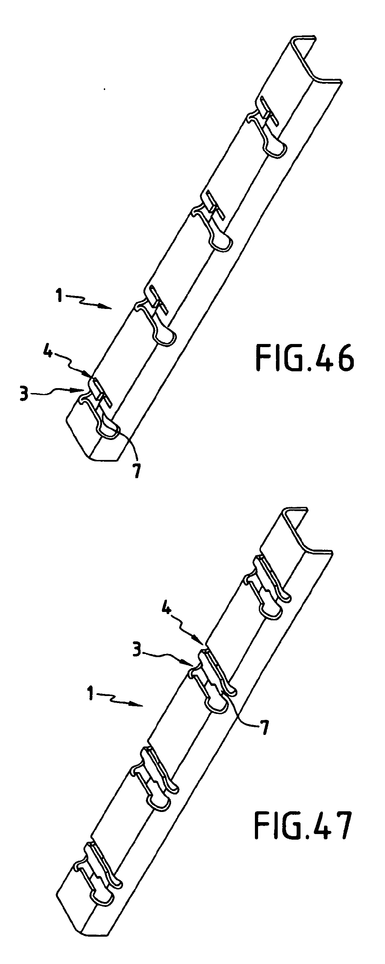

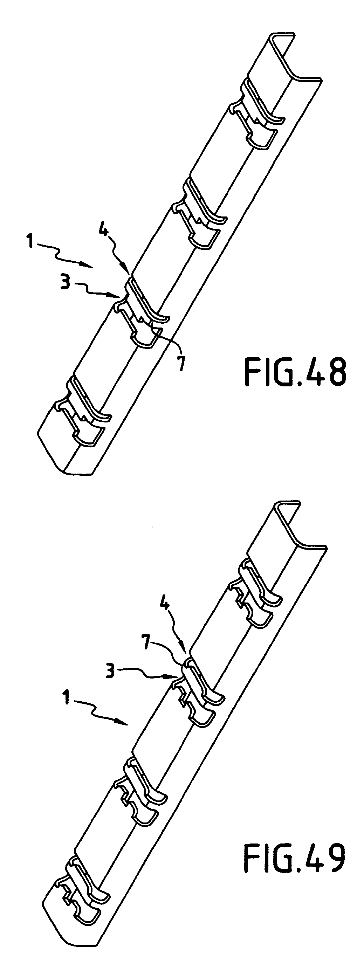

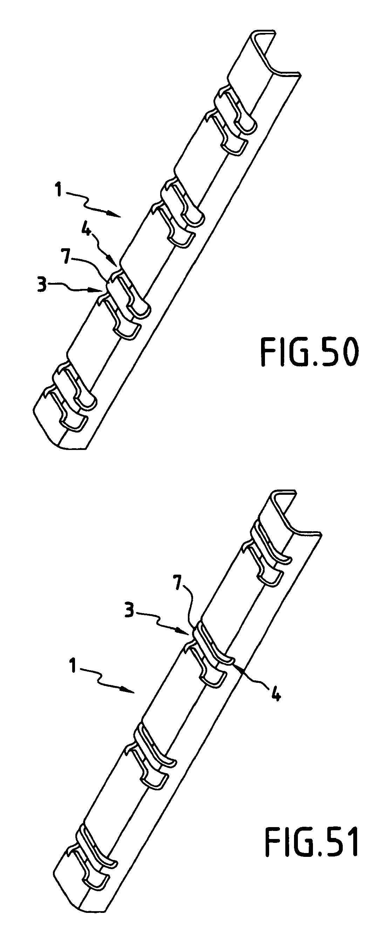

Les figures 46 à 58 illustrent différentes variantes de réalisation conformes à l'invention. Les variantes présentent des caractéristiques supplémentaires qui pourraient être reprises séparément ou en combinaison dans d'autres variantes non décrites.

Dans l'exemple de la figure 46, la fente 4 s'étend sur une partie de la longueur de la gorge 3 et communique directement avec cette dernière délimitant deux minces bandes de matière 7 déformables séparément.

Les exemples des figures 47 à 51 présentent des variantes dans lesquelles la fente 4 s'étend sur toute la longueur de la gorge 3 avec des découpes différentes, d'une figure à l'autre, des bords de chaque fente 4 et des bords de chaque gorge 3.

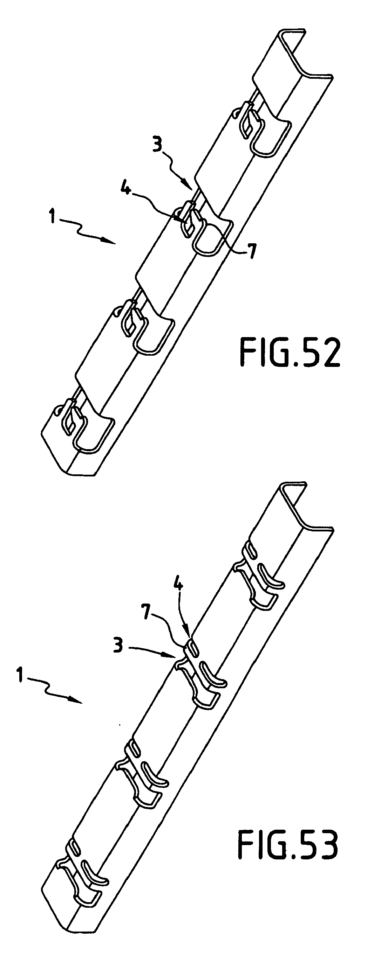

La figure 52 représente une variante dans laquelle la fente 4 est sensiblement rectangulaire, la bande de matière 7 étant constituée d'une partie en L déformable.

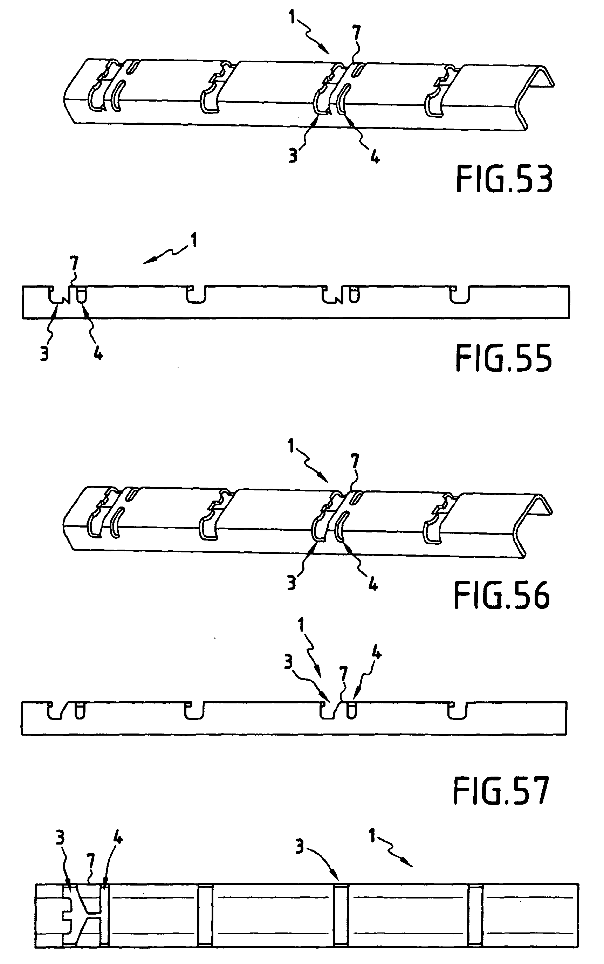

La figure 53 représente une variante avec deux fentes partant des bords de la surface supérieure de l'élément support parallèlement à la gorge 3 en direction du centre sans se rejoindre, la bande de matière 7 déformable pouvant être déformée soit au niveau d'une des deux fentes 4, soit au niveau des deux fentes 4.

Les figures 54 et 55 reprennent l'exemple de la figure 53 avec au fond de la gorge 3 une saillie formant une patte d'encliquetage lors de l'engagement élastique dans un plan sensiblement horizontal des composants longilignes.

Il est à noter que dans cette variante, toutes les gorges 3 ne sont pas associées à des fentes 4.

Les gorges 3 associées à des fentes 4 assureront principalement un blocage en translation dans le plan horizontal des composants longilignes tandis que les autres gorges 3 assureront un blocage en translation dans le plan vertical des composants longilignes.

Dans la variante illustrée aux figures 56 et 57, on prévoit également que certaines gorges 3 ne soient pas associées à des fentes 4.

Dans cette variante, un des bords des gorges 3 associées à des fentes 4 est biseauté de sorte à constituer une gorge d'encliquetage lors de l'engagement élastique des composants longilignes dans un plan sensiblement vertical.

La figure 58 illustre une variante de console dans laquelle la gorge 8 présente, vue de dessus, une forme en V avec la pointe en direction de la fente 4 qui est ouverte sur la gorge 3 de manière à définir une bande de matière 7 constituée de deux pattes déformables.

Il est également important de noter que les dimensions des gorges 3 présentées dans les figures 46 à 58 permettront l'introduction complète des éléments longilignes qu'elles sont destinées à recevoir.

Les consoles qui viennent d'être décrites peuvent être accrochées à leur support, en cantilever, avec une paroi de report de charge telle que référencée 13.

En variante, ces consoles peuvent présenter une forme de C ou de U ainsi qu'il est connu de la demanderesse depuis au moins 1993 et illustré par exemple en figures 3 et 5 du document FR-2.727.712 de 1994.

Les consoles qui viennent d'être décrites permettent la fixation de chemins de câbles en feuille ou indifféremment à fil, sans perte excessive de matière constituant la console et donc en préservant une bonne rigidité, la console étant dépourvue de saillies pouvant blesser les câbles lors de leur tirage et/ou pouvant blesser l'opérateur lors de l'installation ou de l'entretien.

## Revendications

1. Elément support pour chemins de câbles à fil ou en feuille, comprenant des gorges (3) permettant l'engagement de fils d'un chemin de câbles, **caractérisé en ce qu'**il comprend au moins une fente (4) délimitant avec la gorge (3), une mince bande de matière (7) déformable plastiquement contre le fil engagé dans ladite gorge pour le blocage de ce fil dans sa gorge (3), les gorges étant formées par encoches en creux et/ou par emboutis (20) dans une paroi dite supérieure de l'élément support, le fond des gorges définissant un plan d'appui pour fils d'un chemin de câbles.

2. Elément support selon la revendication 1, **caractérisé en ce que** le plan d'appui défini par le fond des gorges est écarté d'un second plan d'appui pour chemins de câbles, notamment en feuille, second plan défini par lesdits emboutis et/ou par la paroi de l'élément support qui est pourvue desdites encoches en creux.

3. Elément support selon la revendication 1 ou 2, **caractérisé en ce qu'**il est constitué d'une console.

4. Elément support selon l'une quelconque des revendications 1 à 3, **caractérisé en ce que** les gorges sont réparties selon la longueur de la partie porteuse de l'élément support, suivant un pas correspondant à un intervalle de répétition des fils d'un chemin de câbles.

5. Elément support selon l'une quelconque des revendications 1 à 4, **caractérisé en ce que** les gorges (3) s'étendent sur toute la largeur de sa paroi supérieure.

6. Elément support selon l'une quelconque des revendications 1 à 5, **caractérisé en ce que** chaque gorge (3) est disposée à proximité de la fente (4) de sorte à border la bande de matière plastiquement déformable (7) contre un fil (6) d'un chemin de câbles.

7. Elément support selon l'une quelconque des revendications 1 à 6, **caractérisé en ce que** la profondeur des gorges (3) est au moins égale ou sensiblement supérieure à la mi-section des éléments longilignes qu'elles sont destinées à recevoir.

8. Elément support selon l'une quelconque des revendications 1 à 6, **caractérisé en ce que** la profondeur des gorges (3) est supérieure à la section des éléments longilignes qu'elles sont destinées à recevoir.

9. Elément support selon l'une quelconque des revendications 1 à 8, **caractérisé en ce que** sa paroi supérieure est la paroi dorsale d'un profilé de section en L, en C ou en U, W, X, carré, rond, ou en oméga, , les ailes de ce profilé rigidifiant ledit élément support.

10. Elément support selon l'une quelconque des revendications 1 à 9, **caractérisé en ce qu'**il comprend une branche dans laquelle sont placées les gorges (3) et fentes (4), et une autre branche sensiblement perpendiculaire, ou deux autres branches, les branches étant raccordées entre elles par des zones de coude.

11. Elément support selon l'une quelconque des revendications 1 à 10, **caractérisé en ce qu'**au moins une gorge (3) s'étend sensiblement perpendiculairement aux autres gorges (3), l'élément support permettant ainsi le blocage de fil de chaîne ou de fil de trame d'un chemin de câbles à fil.

12. Elément support selon l'une quelconque des revendications 1 à 11, **caractérisé en ce que** la fente (4), délimitant pour chaque gorge (3) la bande déformable (7), s'étend parallèlement à cette gorge (3) sur toute la longueur de la gorge.

13. Elément support selon l'une quelconque des revendications 1 à 11, **caractérisé en ce que** la fente (4) délimitant pour chaque gorge (3) une bande déformable (7), s'étend parallèlement à cette gorge mais sur une partie seulement de la longueur de cette gorge.

14. Elément support selon la revendication 13, **caractérisé en ce que** les fentes (4) s'étendent, à proximité d'un bord latéral de la paroi supérieure de l'élément support ou constituant des lumières sensiblement à mi-largeur de cette paroi supérieure.

15. Elément support selon la revendication 13, **caractérisé en ce que** les gorges (3) s'étendent sur toute la largeur de la paroi supérieure de l'élément support, deux fentes (4) s'étendant chacune, pour chaque gorge (3) à partir d'un bord latéral de cette paroi d'appui.

16. Elément support selon l'une quelconque des revendications 1 à 15, **caractérisé en ce que** les fentes (4) sont formées par des trous oblongs dont un bord est à faible distance des gorges (3).

17. Elément support selon l'une quelconque des revendications 1 à 16, **caractérisé en ce qu'**au moins une saillie vient partiellement restreindre l'ouverture d'une gorge (3) de sorte à former appui pour un composant longiligne engagé dans ladite gorge (3) et/ou de sorte à former une patte élastique d'encliquetage lors de l'engagement dudit composant longiligne dans ladite gorge (3).

18. Elément support selon l'une quelconque des revendications 1 à 16, **caractérisé en ce qu'**au moins une saillie est disposée au fond de la gorge (3) de sorte à former une patte d'encliquetage lors de l'engagement élastique dans un plan sensiblement vertical dudit composant longiligne dans ladite gorge (3).

19. Elément support selon l'une quelconque des revendications 1 à 18, **caractérisé en ce qu'**il comprend au moins une gorge (3) de réception de fil de chemins de câbles, gorge délimitée par deux emboutis contigus (20) ménagés dans la paroi supérieure dudit élément support.

20. Elément support selon la revendication 19, **caractérisé en ce qu'**au moins un des emboutis porte ladite fente définissant, sur une partie du pourtour de l'embouti, ladite bande déformable plastiquement contre un fil engagé dans la gorge (30), gorge délimitée par les emboutis contigus (20).

21. Elément support selon l'une quelconque des revendications 1 à 20, **caractérisé en ce qu'**il comprend au moins un embouti pourvu d'un trou oblong (15) de passage d'un moyen de fixation pour chemins de câbles en feuille.

## Claims

1. Support element for wire mesh or sheet metal cable trays, comprising grooves (3) enabling the engaging of cable tray wires, **characterized in that** it comprises at least one slot (4) which, together with groove (3), delimits a thin strip of material(7)that is plastically deformable against the wire engaged in said groove to lock this wire in place in its groove(3), the grooves being formed of hollowed notches and/or pressings (20) in a so-called upper wall of the support element, the bottom of the grooves defining a bearing plane for cable tray wires.

2. Support element as in claim 1, **characterized in that** the bearing plane defined by the bottom of the grooves is distanced from a second bearing plane for cable trays, sheet metal cable trays in particular, which second plane is defined by said pressings and/or by the wall of the support element which is provided with said hollowed notches.

3. Support element as in claim 1 or 2, **characterized in that** it consists of a bracket.

4. Support element as in any of claims 1 to 3, **characterized in that** the grooves are distributed along the length of the carrier part of the support element, in a pitch corresponding to a repeat interval of the wires of a cable tray.

5. Support element as in any of claims 1 to 4, **characterized in that** the grooves (3) extend over the entire width of its upper wall.

6. Support element as in any of claims 1 to 5, **characterized in that** each groove (3) is arranged in the vicinity of the slot (4) so as to border the strip of material (7) plastically deformable material against a wire (6) of a cable tray.

7. Support element as in any of claims 1 to 6, **characterized in that** the depth of the grooves (3) is at least equal to or substantially greater than the mid-section of the longitudinal elements they are intended to receive.

8. Support element as in any of claims 1 to 6, **characterized in that** the depth of the grooves (3) is greater than the section of the longitudinal elements they are intended to receive.

9. Support element as in any of claims 1 to 8, **characterized in that** its upper wall is the dorsal wall of an L-, C-, U-, W-, X-shaped, square, round or omega section, the wings of this section rigidifying said support element.

10. Support element as in any of claims 1 to 9, **characterized in that** it comprises an arm in which the grooves (3) and slots (4) are placed, and another substantially perpendicular arm, or two other arms, the arms being joined together by bend zones.

11. Support element as in any of claims 1 to 10, **characterized in that** at least one groove (3) extends substantially perpendicular to the other grooves (3), the support element thereby enabling locking of the warp or weft wire of a wire mesh cable tray.

12. Support element as in any of claims 1 to 11, **characterized in that** the slot (4) delimiting a deformable strip (7) for each groove (3) extends parallel to this groove (3) over the entire length of the groove.

13. Support element as in any of claims 1 to 11, **characterized in that** the slot (4) delimiting a deformable strip (7) for each groove (3) extends parallel to this groove but only over part of the length of this groove.

14. Support element as in claim 13, **characterized in that** the slots (4) extend in the vicinity of a lateral edge of the upper wall of the support element or form lumens substantially at mid-width of this upper wall.

15. Support element as in claim 13, **characterized in that** the grooves (3) extend over the entire width of the upper wall of the support element, two slots (4) each extending for each groove (3) from a lateral edge of this bearing wall.

16. Support element as in any of claims 1 to 15, **characterized in that** the slots (4) are formed by oblong holes of which one edge lies at a short distance from the grooves (3).

17. Support element as in any of claims 1 to 16, **characterized in that** at least one projection partly restricts the opening of a groove (3) so as to form a bearing surface for a longitudinal component engaged in said groove (3) and/or to form an elastic press-fit lug when engaging said longitudinal component in said groove (3).

18. Support element as in any of claims 1 to 16, **characterized in that** at least one projection is arranged in the bottom of the groove (3) so as to form a press-fit lug during the elastic engaging along a substantially vertical plane of said longitudinal component in said groove (3).

19. Support element as in any of claims 1 to 18, **characterized in that** it comprises at least one groove (3) to receive a cable tray wire, which groove is delimited by two contiguous pressings (20) arranged in the upper wall of said support element.

20. Support element as in claim 19, **characterized in that** at least one of the pressings carries said slot which, on part of the surround of the pressing, defines said strip that is plastically deformable against a wire engaged in the groove (30), a groove delimited by the contiguous pressings (20).

21. Support element as in any of claims 1 to 20, **characterized in that** it comprises at least one pressing provided with an oblong hole (15) for passing an attachment means for sheet metal cable trays.

## Patentansprüche

1. Stützelement für Kanäle für Litzenkabel oder Flachbandkabel, umfassend Rillen (3), die das Eingreifen von Litzen eines Kabelkanals ermöglichen, **dadurch gekennzeichnet, daß** es mindestens einen Schlitz (4) umfaßt, der mit der Rille (3) ein dünnes Band (7) aus einem Material, das gegen die in die Rille eingesetzte Litze plastisch deformierbar ist, zum Blockieren dieser Litze in ihrer Rille (3) begrenzt, wobei die Rillen von hohlen Kerben und/oder von Ansatzstücken (20) in einer so genannten oberen Wand des Stützelements gebildet sind, wobei der Boden der Rillen eine Stützebene für die Litzen eines Kabelkanals definiert.

2. Stützelement nach Anspruch 1, **dadurch gekennzeichnet, daß** die vom Boden der Rillen definierte Stützebene von einer zweiten Stützebene für Kanäle von Kabeln, insbesondere Flachbandkabeln, beabstandet ist, wobei die zweite Ebene von den Ansatzstücken und/oder von der Wand des Stützelements, die mit den hohlen Kerben versehen ist, definiert ist.

3. Stützelement nach Anspruch 1 oder 2, **dadurch gekennzeichnet, daß** es aus einer Konsole besteht.

4. Stützelement nach einem der Ansprüche 1 bis 3, **dadurch gekennzeichnet, daß** die Rillen entlang der Länge des tragenden Teils des Stützelements in einem Abstand verteilt sind, der einem Wiederholungsintervall der Litzen eines Kabelkanals entspricht.

5. Stützelement nach einem der Ansprüche 1 bis 4, **dadurch gekennzeichnet, daß** sich die Rillen (3) über die gesamte Breite seiner oberen Wand erstrecken.

6. Stützelement nach einem der Ansprüche 1 bis 5, **dadurch gekennzeichnet, daß** jede Rille (3) in der Nähe des Schlitzes (4) derart angeordnet ist, daß sie das Band (7) aus plastisch deformierbarem Material gegen eine Litze (6) eines Kabelkanals abgrenzt.

7. Stützelement nach einem der Ansprüche 1 bis 6, **dadurch gekennzeichnet, daß** die Tiefe der Rillen (3) mindestens gleich oder wesentlich größer als der halbe Querschnitt der länglichen Elemente ist, die sie aufnehmen sollen.

8. Stützelement nach einem der Ansprüche 1 bis 6, **dadurch gekennzeichnet, daß** die Tiefe der Rillen (3) größer als der Querschnitt der länglichen Elemente ist, die sie aufnehmen sollen.

9. Stützelement nach einem der Ansprüche 1 bis 8, **dadurch gekennzeichnet, daß** seine obere Wand die Rückwand eines Profils mit einem Querschnitt in Form eines L, C oder U, W, X, einem quadratischen, runden oder omegaförmigen Querschnitt ist, wobei die Flügel dieses Profils das Stützelement versteifen.

10. Stützelement nach einem der Ansprüche 1 bis 9, **dadurch gekennzeichnet, daß** es einen Bereich umfaßt, in dem die Rillen (3) und Schlitze (4) angeordnet sind, und einen weiteren im wesentlichen senkrechten Bereich oder zwei weitere Bereiche, wobei die Bereiche miteinander durch gebogene Zonen verbunden sind.

11. Stützelement nach einem der Ansprüche 1 bis 10, **dadurch gekennzeichnet, daß** sich mindestens eine Rille (3) im wesentlichen senkrecht zu den anderen Rillen (3) erstreckt, wobei das Stützelement somit die Blockierung einer Kettlitze oder Schußlitze eines Litzenkabelkanals ermöglicht.

12. Stützelement nach einem der Ansprüche 1 bis 11, **dadurch gekennzeichnet, daß** sich der Schlitz (4), der für jede Rille (3) das verformbare Band (7) begrenzt, parallel zu dieser Rille (3) über die gesamte Länge der Rille erstreckt.

13. Stützelement nach einem der Ansprüche 1 bis 11, **dadurch gekennzeichnet, daß** sich der Schlitz (4), der für jede Rille (3) ein verformbares Band (7) begrenzt, parallel zu dieser Rille, aber auf nur einem Teil der Länge dieser Rille erstreckt.

14. Stützelement nach Anspruch 13, **dadurch gekennzeichnet, daß** sich die Schlitze (4) in der Nähe eines Seitenrandes der oberen Wand des Stützelements erstrecken oder Öffnungen im Wesentlichen auf halber Breite dieser oberen Wand bilden.

15. Stützelement nach Anspruch 13, **dadurch gekennzeichnet, daß** sich die Rillen (3) über die gesamte Breite der oberen Wand des Stützelements erstrecken und sich zwei Schlitze (4) jeweils für jede Rille (3) von einem Seitenrand dieser Stützwand ausgehend erstrecken.

16. Stützelement nach einem der Ansprüche 1 bis 15, **dadurch gekennzeichnet, daß** die Schlitze (4) aus länglichen Löchern bestehen, wobei sich ein Rand derselben in geringem Abstand zu den Rillen (3) befindet.

17. Stützelement nach einem der Ansprüche 1 bis 16, **dadurch gekennzeichnet, daß** mindestens ein Vorsprung teilweise die Öffnung einer Rille (3) einschränkt, so daß eine Abstützung für ein längliches Bauteil, das in diese Rille (3) eingesetzt ist, gebildet wird und/oder daß ein elastisches Einraststück beim Eingreifen des länglichen Bauteils in die Rille (3) gebildet wird.

18. Stützelement nach einem der Ansprüche 1 bis 16, **dadurch gekennzeichnet, daß** mindestens ein Vorsprung am Boden der Rille (3) derart angeordnet ist, daß ein Einraststück beim elastischen Eingreifen in einer im wesentlichen vertikalen Ebene des länglichen Bauteils in die Rille (3) gebildet wird.

19. Stützelement nach einem der Ansprüche 1 bis 18, **dadurch gekennzeichnet, daß** es mindestens eine Rille (3) zur Aufnahme einer Litze von Kabelkanälen umfaßt, welche Rille von zwei aneinander grenzenden Ansatzstücken (20) begrenzt ist, die in der oberen Wand des Stützelements vorgesehen sind.

20. Stützelement nach Anspruch 19, **dadurch gekennzeichnet, daß** mindestens eines der Ansatzstücke den Schlitz trägt, der auf einem Teil des Umfangs des Ansatzstücks das plastisch gegen eine in der Rille (30) eingesetzte Litze verformbare Band definiert, welche die Rille durch die aneinander grenzenden Ansatzstücke (20) begrenzt ist.

21. Stützelement nach einem der Ansprüche 1 bis 20, **dadurch gekennzeichnet, daß** es mindestens ein Ansatzstück umfaßt, das mit einem länglichen Loch (15) für den Durchgang eines Befestigungsmittels für Flachbandkabelkanäle versehen ist.
